# EUROPEAN PATENT APPLICATION

(11) **EP 4 400 331 A1**
(43) Date of publication of application: **17.07.2024**
(21) Application number: 22864130.4
(22) Date of filing: 28.07.2022
(51) Int. Cl.: B60C 9/22, B29D 30/30

(54) **TIRE AND METHOD FOR MANUFACTURING TIRE**

(30) Priority: 06.09.2021 JP 2021145049
(71) Applicant: BRIDGESTONE CORPORATION, Chuo-ku Tokyo 104-8340 (JP)
(72) Inventor: ASANO Yuji, Tokyo 104-8340 (JP)
(74) Representative: Marks & Clerk LLP
(86) International application number: PCT/JP2022/029197
(87) International publication number: WO 2023/032542

(57) **Abstract**

In the tire of this disclosure, the belt layer is composed of tape-like members consisting of a plurality of belt cords arranged parallel to each other and coated with rubber, arranged in the tire circumferential direction, and the tape-like member has a tape width of 1 to 10 mm. On the tire equatorial plane, two of the tape-like members adjacent to each other in the tire circumferential direction are arranged such that the tire circumferential ends thereof are butted against each other, otherwise, at the end portions of the belt layer, two of the tape-like members adjacent to each other in the tire circumferential direction are arranged such that only the rubber portions overlap each other in the tire radial direction. In the tire production method of this disclosure, the aforementioned tape-like members are sequentially attached in the tire circumferential direction at a predetermined angle to the tire circumferential direction, to form a belt ply composed of the tape-like members arranged in the tire circumferential direction in a belt ply forming process. In the attaching process, on the tire equatorial plane, two of the tape-like members adjacent to each other in the tire circumferential direction are attached so that they are butted against each other at tire circumferential ends thereof, otherwise, at the end portions of the belt layer, two of the tape-like members adjacent to each other in the tire circumferential direction are attached so that only the rubber portions overlap each other in the tire radial direction.

## Description

### TECHNICAL FIELD

This disclosure relates to a tire and a tire production method.

### BACKGROUND

In recent years, in order to improve the dimensional accuracy of tires, a production method for pneumatic tires has been proposed that involves a raw tire forming process, in which a raw tire is formed by using a rigid core with an outer shape similar to that of the tire lumen after vulcanization, and sequentially attaching unvulcanized tire components such as carcass plies and belt plies on the outer surface of the rigid core.

For example, Patent Document 1 proposes to form belt plies by sequentially attaching tapes with a width of 10 to 50 mm at predetermined angles. Since the method by attaching is easy as a production process, tires with high dimensional accuracy can be produced with high productivity according to Patent Document 1.

### CITATION LIST

### Patent Literature

PTL 1: JP 2012/171183 A1

### SUMMARY

### (Technical Problem)

However, in the method described in Patent Document 1, the above tapes are attached so that they butt up against each other at the outer ends of the belt plies and are spaced apart at the center of the tread. This could result in vibration and noise caused by the spacing that occurs at the center of the tread. In addition, since the relatively wide tapes with a width of 10 to 50 mm are used and the rigidity of each tape is high, it is difficult to attach the tapes while following the angular change according to the position in the tire width direction caused by the crown curvature of the tire. Thus, there was a risk that the inclination angle of the belt with respect to the tire circumferential direction would become non-uniform in the tire width direction.

It is therefore an object of the present disclosure to provide: a tire with controlled vibration and noise generation, and a tire production method that achieves high productivity, controls the generation of vibration and noise, and improves the uniformity of the inclination angle of the belt with respect to the tire circumferential direction across the tire width direction.

### (Solution to Problem)

The gist structure of the present disclosure is as follows.
(1) A tire comprising a pair of bead portions,
   a carcass straddling between the pair of bead portions in a toroidal shape, and
   a belt consisting of one or more belt layers disposed on the outer side in the tire radial direction of a crown portion of the carcass, wherein
   the belt layer is composed of tape-like members consisting of a plurality of belt cords arranged parallel to each other and coated with rubber, arranged in the tire circumferential direction,
   the tape-like member has a tape width of 1 to 10 mm, and
   on the tire equatorial plane, two of the tape-like members adjacent to each other in the tire circumferential direction are arranged such that tire circumferential ends thereof are butted against each other.
(2) A tire comprising a pair of bead portions,
   a carcass straddling between the pair of bead portions in a toroidal shape, and
   a belt consisting of one or more belt layers disposed on the outer side in the tire radial direction of a crown portion of the carcass, wherein
   the belt layer is composed of tape-like members consisting of a plurality of belt cords arranged parallel to each other and coated with rubber, arranged in the tire circumferential direction,
   the tape-like member has a tape width of 1 to 10 mm, and
   at the end portions of the belt layer, two of the tape-like members adjacent to each other in the tire circumferential direction are arranged such that the belt cords thereof do not overlap each other in the tire radial direction.
(3) A tire production method for a tire comprising a pair of bead portions, a carcass straddling between the pair of bead portions in a toroidal shape, and a belt consisting of one or more belt layers disposed on the outer side in the tire radial direction of a crown portion of the carcass, wherein
   the method includes a raw tire forming process: using a toroidal-shaped rigid core with a tire forming surface that forms a luminal surface of the tire on its outer surface, and sequentially attaching unvulcanized tire components including carcass plies and belt plies on the tire forming surface of the rigid core to form a raw tire,
   the raw tire forming process includes a belt ply forming process: forming the belt ply via the carcass ply on the tire forming surface of the rigid core,
   the belt ply forming process includes an attaching process: attaching tape-like members with a tape width of 1 to 10 mm, consisting of a plurality of belt cords arranged parallel to each other and coated with rubber, sequentially in the tire circumferential direction at a predetermined angle to the tire circumferential direction, to form a belt ply composed of the tape-like members arranged in the tire circumferential direction, and
   in the attaching process, on the tire equatorial plane, two of the tape-like members adjacent to each other in the tire circumferential direction are attached so that they are butted against each other at tire circumferential ends thereof.
(5) A tire production method for a tire comprising a pair of bead portions, a carcass straddling between the pair of bead portions in a toroidal shape, and a belt consisting of one or more belt layers disposed on the outer side in the tire radial direction of a crown portion of the carcass, wherein
   the method includes a raw tire forming process: using a toroidal-shaped rigid core with a tire forming surface that forms a luminal surface of the tire on its outer surface, and sequentially attaching unvulcanized tire components including carcass plies and belt plies on the tire forming surface of the rigid core to form a raw tire,
   the raw tire forming process includes a belt ply forming process: forming the belt ply via the carcass ply on the tire forming surface of the rigid core,
   the belt ply forming process includes an attaching process: attaching tape-like members with a tape width of 1 to 10 mm, consisting of a plurality of belt cords arranged parallel to each other and coated with rubber, sequentially in the tire circumferential direction at a predetermined angle to the tire circumferential direction to form a belt ply composed of the tape-like members arranged in the tire circumferential direction, and
   in the attaching process, at the end portions of the belt layer, two of the tape-like members adjacent to each other in the tire circumferential direction are attached so that the belt cords thereof do not overlap each other in the tire radial direction.

### (Advantageous Effect)

According to the present disclosure, it is possible to provide: a tire with controlled vibration and noise generation, and a tire production method that achieves high productivity, controls the generation of vibration and noise, and improves the uniformity of the inclination angle of the belt with respect to the tire circumferential direction across the tire width direction.

### BRIEF DESCRIPTION OF THE DRAWINGS

In the accompanying drawings:
FIG. 1 is a schematic cross-sectional view in the tire width direction of the tire according to one embodiment of this disclosure;
FIG.2 is a schematic plan view of the belt structure of the tire;
FIG. 3 illustrates the dimensions of the tape-like member;
FIG. 4A illustrates the dimensions related to the coating rubber on the tire equatorial plane;
FIG. 4B illustrates the dimensions related to the coating rubber at the end portion of the belt layer;
FIG. 5 illustrates a schematic cross-sectional view of the tire and the rigid core;
FIG.6 is a schematic diagram for explaining the angle of the carcass ply; and
FIG 7 is a schematic diagram for explaining the width of the carcass ply.

### DETAILED DESCRIPTION

The following is a detailed illustration of the embodiment of this disclosure with reference to the drawings.

### <Tire>

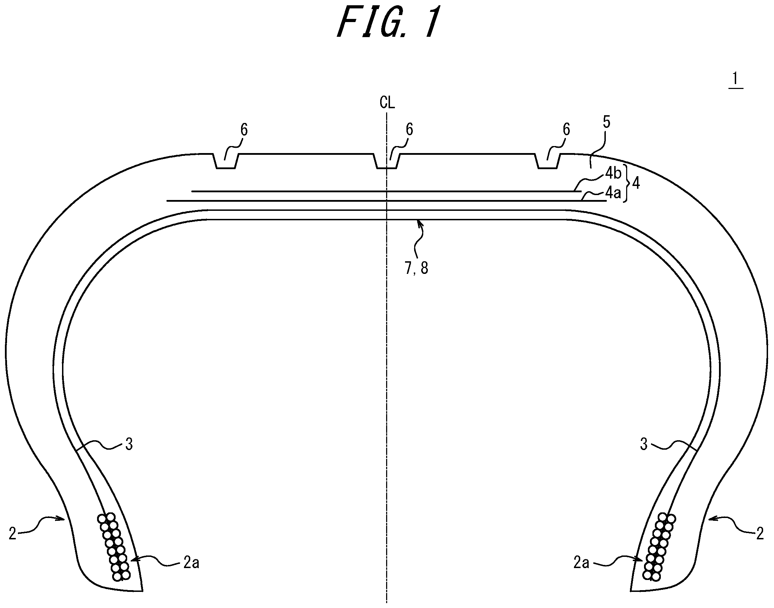

The following is a description of a tire in accordance with one embodiment of this disclosure. In this embodiment, the tire can be a pneumatic tire. Figure. 1 is a schematic cross-sectional view in the tire width direction of the tire according to one embodiment of this disclosure. As illustrated in Figure 1, the tire 1 comprises a pair of bead portions 2, a carcass 3 straddling between the pair of bead portions 2 in a toroidal shape, a belt 4 consisting of one or more belt layers disposed on the outer side in the tire radial direction of the crown portion of the carcass 3, and a tread 5 disposed on the outer side in the tire radial direction of the belt 4.

In the illustrated example, a bead core 2a is embedded in the bead portion 2. In this example, the bead core 2a is divided into two small bead cores in the tire width direction, but is not limited to this example.

In the illustrated example, the carcass 3 consists of one or more carcass plies. The carcass 3 straddles between the pair of bead portions 2 in a toroidal shape. In this example, the end portions of the carcass 3 is sandwiched between two small bead cores, but this is not the only case. The cord of the carcass ply can be an organic fiber cord, although it is not limited to any particular type. The number of carcass plies is also not particularly limited as long as it is one or more.

In the illustrated example, the belt 4 is an inclined belt, consisting of two belt layers 4a and 4b, with the belt cords extending across each other between the layers. The angle of the belt cords with respect to the tire circumferential direction is not limited, but can be 20° to 75°, for example. The number of belt layers is not limited as long as there is at least one layer. The material of the belt cords are not limited, but can be steel cords.

In the illustrated example, the tread 5 comprises one layer of tread rubber, but it can also be formed as a tread with multiple layers of rubber in the tire radial direction or the tire width direction. Also, in the illustrated example, three circumferential main grooves 6 are arranged in the tread 5, but the number of circumferential main grooves, groove width, groove depth, and groove shape are not limited.

In the illustrated example, an inner liner 8 is disposed on the tire inner surface 7. This prevents air and gas permeation.

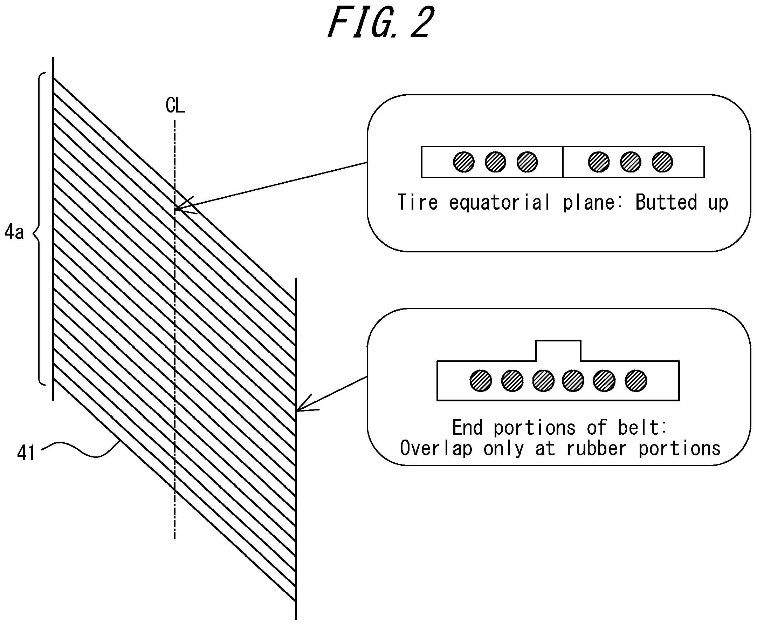

Figure 2 is a schematic plan view of the belt structure of the tire according to this embodiment. As illustrated in Figure 2, in this embodiment, the belt layer 4a is composed of tape-like members 41 consisting of a plurality of (e.g., one to three) belt cords arranged parallel to each other and coated with rubber, arranged in the tire circumferential direction. Although not illustrated in the figure, the same applies to the belt layer 4b.

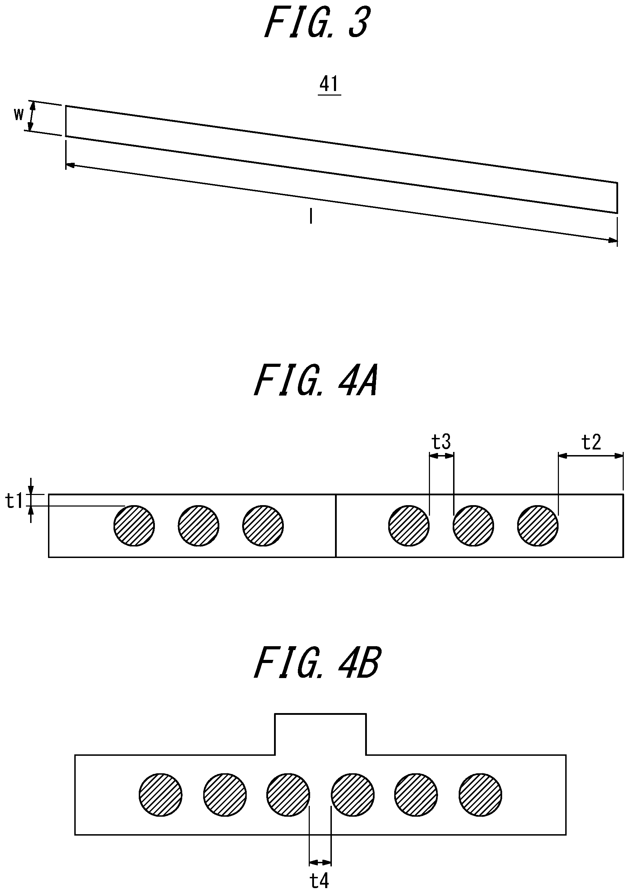

Figure. 3 illustrates the dimensions of the tape-like member. Referring to Figure 3, in this embodiment, the tape-like member 41 has a tape width w of 1 to 10 mm (preferably, 2 to 8 mm). The length l of the tape-like member 41 in the longitudinal direction can be determined as appropriate depending on the belt width.

As schematically illustrated in the enlarged view in Figure 2, on the tire equatorial plane CL, two of the tape-like members 41 adjacent to each other in the tire circumferential direction are arranged such that the tire circumferential ends thereof are butted against each other (e.g., when the tape-like members are most open between them (due to attaching variations)). In addition, at the end portions of the belt, two of the tape-like members adjacent to each other in the tire circumferential direction overlap each other, in the tire radial direction, only at rubber portions thereof. In other words, the belt cords do not overlap each other in the tire radial direction.

The following is an explanation of the effects of the tire according to this embodiment.

According to the tire of this embodiment, on the tire equatorial plane CL, two of the tape-like members 41 adjacent to each other in the tire circumferential direction are arranged such that the tire circumferential ends thereof are butted against each other, thus no gaps or bumps between them occur in the tire circumferential direction. Therefore, the generation of vibration and noise caused by those gaps and bumps can be controlled. In addition, at the end portions of the belt layer, two of the tape-like members adjacent to each other in the tire circumferential direction overlap each other, in the tire radial direction, only at the rubber portions thereof, thus there are no bumps caused by overlapping the belt cords in the tire radial direction, and since the overlap of the rubber portions will be crushed and reduced, the generation of vibration and noise caused by large bumps can be controlled.

In addition, the inclination angle of the belt cords with respect to the tire circumferential direction can also be made uniform across the tire width direction to improve ground contact shape.

As described above, the tire of this embodiment can control the generation of vibration and noise.

Note that, either the two tape-like members 41 adjacent to each other in the circumferential direction are arranged such that the tire circumferential ends thereof are butted against each other on the tire equatorial plane CL, or two tape-like members adjacent to each other in the circumferential direction are arranged such that only the rubber portions thereof overlap in the tire radial direction (the belt cords do not overlap each other in the tire radial direction) at the end portions of the belt layer, the generation of vibration and noise caused by the gaps and bumps mentioned above or the generation of vibration and noise caused by the large bumps mentioned above can be controlled. Therefore, the effect of controlling the generation of vibration and noise can be obtained.

Figure 4A illustrates the dimensions related to the coating rubber on the tire equatorial plane. Figure 4B illustrates the dimensions related to the coating rubber at the end portions of the belt layer. As illustrated in Figure 4A, the thickness t1 of the coating rubber of the belt layer is not limited, but can be 0.1 to 0.2 mm, for example. Also, the distance in the width direction of the tape-like member from the end of the outermost belt cord among the plurality of belt cords of the tape-like member to the end of the tape-like member (the width of the edge rubber portion) t2 can be determined according to the curvature of crown portion of the tire. That is, the tire usually has a difference in circumferential length, where the circumference at the tire equatorial plane is longer than the circumference at the end portions of the belt due to the curvature of the crown portion. Therefore, as illustrated in Figure 2, when the tape-like members are butted against each other on the tire equatorial plane, the tape-like members will overlap each other at the end portions of the belt ply due to the difference in circumferential length, however, it is desirable that the belt cords do not overlap each other in the radial direction. For this purpose, it is preferable to secure a certain width t2, and the larger the difference in the circumferential length, the larger t2 preferably be secured. Since it depends on the difference in circumferential length, t2 can be set to 0.3 to 2.0 mm, for example, although it is not particularly limited. The distance between cords (shortest distance) t3 is not limited, but can be 0.3 to 2.0 mm, for example. In addition, as illustrated in Figure 4B, it is preferable that, at the end portions of the belt, the shortest distance t4 between the belt cords of two of the tape-like members adjacent to each other in the tire circumferential direction is 0 mm or more and 2 mm or less. By setting t4 to 0 mm or more, it is possible to prevent the belt cords from overlapping each other in the tire radial direction. On the other hand, by setting t4 to 2 mm or less, it is possible to prevent the belt cords from being sparse when viewed in the tire circumferential direction.

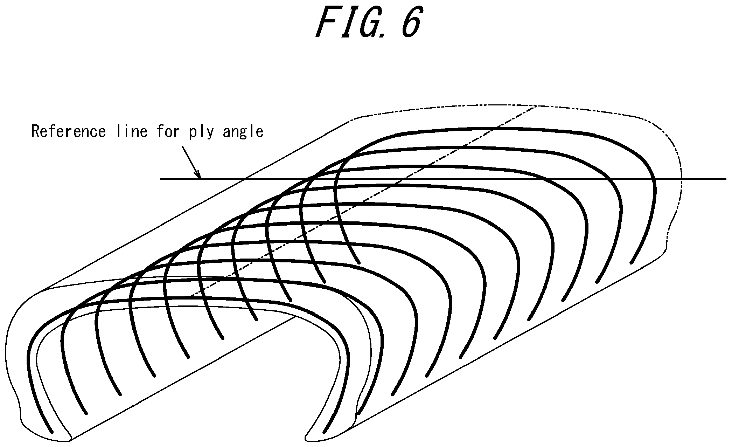

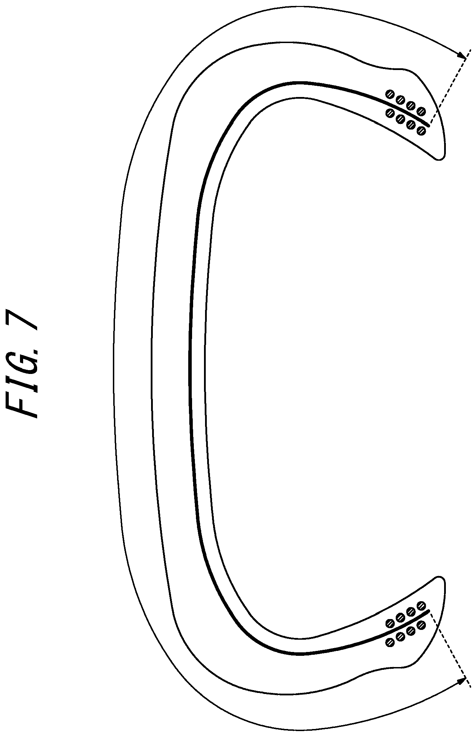

Here, as illustrated in Figure 6, when the line parallel to the tire width direction is used as a reference line, the carcass ply can be attached at a variable angle of -75 to 75° with respect to the reference line. Also, as illustrated in Figure 7, the end-to-end length of the carcass ply (distance along the way) is preferably at least 270 mm in an unloaded condition. In addition to that, the maximum width of the belt is preferably at least 100 mm in the unloaded condition.

For relatively large tires such as those described above, the difference in circumferential length is severe when trying to manufacture plies using tape-like members. Therefore, in the case of large tires as described above, according to the present disclosure, the gap between the tape-like members is eliminated, which is effective against the above problem.

### <Tire production method>

The following is a description of a tire production method in accordance with one embodiment of this disclosure. This tire production method is, in one example, a tire production method for the tire in accordance with the embodiment described above. As mentioned above, the tire comprises a pair of bead portions and a carcass straddling between the pair of bead portions in a toroidal shape, and a belt consisting of one or more belt layers disposed on the outer side of the crown portion of the carcass in the tire radial direction. The other components and their details have already been described, so they will not be described again.

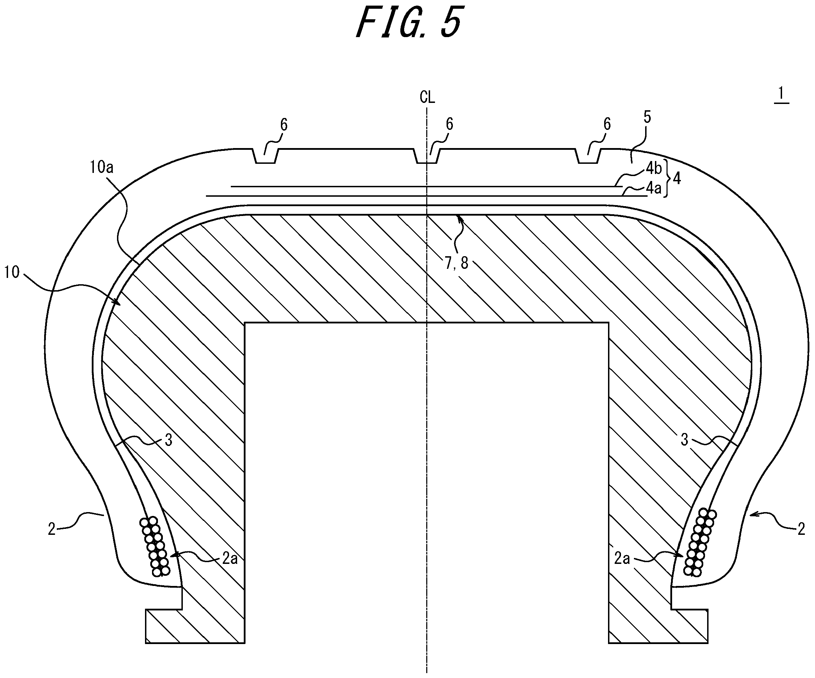

Figure 5 illustrates a schematic cross-sectional view of the tire and a rigid core. The tire production method of this embodiment uses a toroidal-shaped rigid core 10 with a tire forming surface 10a that forms a luminal surface of the tire on its surface, as illustrated in Figure 5. Then, a raw tire is formed by sequentially attaching unvulcanized tire components including carcass plies and belt plies on the tire forming surface 10a of the rigid core 10 (Raw tire forming process).

The above raw tire forming process includes a belt ply forming process, in which a belt ply is formed on the tire forming surface 10a of the rigid core 10 via a carcass ply.

In the above belt ply forming process, the tape-like members 41 with a tape width of 1 to 10 mm (preferably, 2 to 8 mm), consisting of a plurality of belt cords arranged parallel to each other and coated with rubber, are sequentially attached on the tire forming surface 10a, via the carcass ply, in the tire circumferential direction. This forms a belt ply which is composed of the tape-like members 41 arranged in the tire circumferential direction (Attaching process).

In the attaching process, as illustrated in Figure 2, on the tire equatorial plane CL, two of the tape-like members 41 adjacent to each other in the tire circumferential direction are attached so that they are butted against each other at the tire circumferential ends thereof (e.g., when the tape-like members are most open between them (due to the attaching variations)). At the same time, in the attaching process of this embodiment, at the end portions of the belt layer, two of the tape-like members adjacent to each other in the tire circumferential direction are attached so that they overlap each other in the tire radial direction only at the rubber portions thereof (i.e., the belt cords do not overlap each other in the tire radial direction).

As mentioned above, a tire normally has a difference in circumferential length between at the tire equatorial plane and at the end portions of the belt. Therefore, if two of the tape-like members 41 adjacent to each other in the tire circumferential direction on the tire equatorial plane are made to butt against each other at the tire circumferential ends thereof, then two of the tape-like members adjacent to each other in the tire circumferential direction overlap in the tire radial direction at the end portions of the belt layer. Here, by securing the width t2 of the edge rubber portion, only the rubber portions can overlap each other in the tire radial direction (the belt cords are prevented from overlapping each other in the tire radial direction).

According to the tire production method of this embodiment, first, high productivity can be achieved because the tape-like members are easily attached in the production process. In addition, since the tape-like members with a tape width of 1 to 10 mm are used for attaching the tapes, the rigidity of the tape-like members are relatively low and it is possible to attach the tape while following the angular change according to the position in the tire width direction caused by the crown curvature of the tire, and thus, the uniformity of the inclination angle of the belt with respect to the tire circumferential direction across the tire width direction can be improved. Further, in the attaching process, on the tire equatorial plane, two of the tape-like members 41 adjacent to each other in the tire circumferential direction are attached so that they are butted against each other at tire circumferential ends thereof, thereby eliminating gaps or bumps in the tire circumferential direction between them. This prevents the generation of vibration and noise caused by the gaps and bumps. At the same time, in the attaching process, at the end portions of the belt layer, two of the tape-like members adjacent to each other in the tire circumferential direction are attached so that they overlap each other in the tire radial direction only at the rubber portions thereof. This prevents the belt cords from overlapping each other in the tire radial direction, and the overlap of the rubber portions will be collapsed and become smaller, thus the generation of vibration and noise caused by large bumps can be controlled.

As described above, the tire production method of this embodiment enables to obtain a tire with controlled vibration and noise generation while achieving high productivity, and with improved uniformity of the inclination angle of the belt with respect to the tire circumferential direction across the tire width direction.

In the attaching process, if two of the tape-like members 41 adjacent to each other in the circumferential direction are attached so that they are butted against each other at tire circumferential ends thereof on the tire equatorial plane, or two of the tape-like members adjacent to each other in the circumferential direction are attached so that only the rubber portions thereof overlap each other in the tire radial direction (the belt cords do not overlap each other in the tire radial direction) at the end portions of the belt layer, the generation of vibration and noise caused by the gaps and bumps mentioned above or the generation of vibration and noise caused by the large bumps mentioned above can be controlled. Therefore, the effect of controlling the generation of vibration and noise can be obtained.

Here, same as described in the tire embodiment, the tape-like member can have t1 of 0.1 to 0.2 mm, for example, and t3 of 0.3 to 2.0 mm, for example. Also, the width t2 is not particularly limited because it depends on the difference in circumferential length, as described above, but can be 0.3 to 2.0 mm, for example. In addition, the tape-like members is preferably attached so that the shortest distance t4 between the belt cords of two of the adjacent tape-like members in the tire circumferential direction at the end portions of the belt is to be 0 mm or more and 2 mm or less.

Although the embodiments of this disclosure have been described above, this disclosure is not limited in any way to the above embodiments. In particular, the structure other than the belt can be any known configuration. As for the belt, the number of belt layers need only be one or more, and the belt width and the inclination angle of the belt cords relative to the tire circumferential direction can be adjusted as needed.

### REFERENCE SIGNS LIST

- 1: Tire
- 2: Bead portion
- 3: Carcass
- 4: Belt
- 5: Tread
- 6: Circumferential main groove
- 7: Tire inner surface
- 8: Inner liner
- 10: Rigid core

## Claims

1. A tire comprising a pair of bead portions,
a carcass straddling between the pair of bead portions in a toroidal shape, and
a belt consisting of one or more belt layers disposed on the outer side in the tire radial direction of a crown portion of the carcass, wherein
the belt layer is composed of tape-like members consisting of a plurality of belt cords arranged parallel to each other and coated with rubber, arranged in the tire circumferential direction,
the tape-like member has a tape width of 1 to 10 mm, and
on the tire equatorial plane, two of the tape-like members adjacent to each other in the tire circumferential direction are arranged such that tire circumferential ends thereof are butted against each other.

2. A tire comprising a pair of bead portions,
a carcass straddling between the pair of bead portions in a toroidal shape, and
a belt consisting of one or more belt layers disposed on the outer side in the tire radial direction of a crown portion of the carcass, wherein
the belt layer is composed of tape-like members consisting of a plurality of belt cords arranged parallel to each other and coated with rubber, arranged in the tire circumferential direction,
the tape-like member has a tape width of 1 to 10 mm, and
at the end portions of the belt layer, two of the tape-like members adjacent to each other in the tire circumferential direction are arranged such that the belt cords thereof do not overlap each other in the tire radial direction.

3. The tire according to claim 1 or 2, wherein at the end portions of the belt layer, the shortest distance between the belt cords of two of the tape-like members adjacent to each other in the tire circumferential direction is 0 mm or more.

4. A tire production method for a tire comprising a pair of bead portions, a carcass straddling between the pair of bead portions in a toroidal shape, and a belt consisting of one or more belt layers disposed on the outer side in the tire radial direction of a crown portion of the carcass, wherein
the method includes a raw tire forming process: using a toroidal-shaped rigid core with a tire forming surface that forms a luminal surface of the tire on its outer surface, and sequentially attaching unvulcanized tire components including carcass plies and belt plies on the tire forming surface of the rigid core to form a raw tire,
the raw tire forming process includes a belt ply forming process: forming the belt ply via the carcass ply on the tire forming surface of the rigid core,
the belt ply forming process includes an attaching process: attaching tape-like members with a tape width of 1 to 10 mm, consisting of a plurality of belt cords arranged parallel to each other and coated with rubber, sequentially in the tire circumferential direction at a predetermined angle to the tire circumferential direction, to form a belt ply composed of the tape-like members arranged in the tire circumferential direction, and
in the attaching process, on the tire equatorial plane, two of the tape-like members adjacent to each other in the tire circumferential direction are attached so that they are butted against each other at tire circumferential ends thereof.

5. A tire production method for a tire comprising a pair of bead portions, a carcass straddling between the pair of bead portions in a toroidal shape, and a belt consisting of one or more belt layers disposed on the outer side in the tire radial direction of a crown portion of the carcass, wherein
the method includes a raw tire forming process: using a toroidal-shaped rigid core with a tire forming surface that forms a luminal surface of the tire on its outer surface, and sequentially attaching unvulcanized tire components including carcass plies and belt plies on the tire forming surface of the rigid core to form a raw tire,
the raw tire forming process includes a belt ply forming process: forming the belt ply via the carcass ply on the tire forming surface of the rigid core,
the belt ply forming process includes an attaching process: attaching tape-like members with a tape width of 1 to 10 mm, consisting of a plurality of belt cords arranged parallel to each other and coated with rubber, sequentially in the tire circumferential direction at a predetermined angle to the tire circumferential direction to form a belt ply composed of the tape-like members arranged in the tire circumferential direction, and
in the attaching process, at the end portions of the belt layer, two of the tape-like members adjacent to each other in the tire circumferential direction are attached so that the belt cords thereof do not overlap each other in the tire radial direction.

6. The tire according to claim 4 or 5, wherein at the end portions of the belt layer, the shortest distance between the belt cords of two of the tape-like members adjacent to each other in the tire circumferential direction is to be 0 mm or more.
